# EUROPÄISCHE PATENTSCHRIFT

(11) **EP 3 669 963 B1**
(45) Veröffentlichungstag und Bekanntmachung des Hinweises auf die Patenterteilung: **02.02.2022**
(21) Anmeldenummer: 19217365.6
(22) Anmeldetag: 18.12.2019
(51) Int. Cl.: B01D 45/08

(54) **TROPFENABSCHEIDER MIT NEUER VERBINDUNGSSTRUKTUR**
MIST ELIMINATOR WITH NOVEL CONNECTING STRUCTURE
SÉPARATEUR DE GOUTTES DOTÉE D'UNE NOUVELLE STRUCTURE DE RACCORDEMENT

(30) Priorität: 20.12.2018 DE 102018133150
(43) Veröffentlichungstag der Anmeldung: 24.06.2020
(73) Patentinhaber: RVT Process Equipment GmbH, 96349 Steinwiesen (DE)
(72) Erfinder: Franz, Uwe, 96346 Wallenfels (DE)
(74) Vertreter: Grünecker Patent- und Rechtsanwälte PartG mbB

(56) Entgegenhaltungen:
- EP-A1- 0 023 777
- DE-A1- 3 039 780
- DE-A1- 19 501 282
- DE-U1- 8 218 913
- DE-U1-202011 106 925

## Beschreibung

Die vorliegende Patentanmeldung betrifft einen Tropfenabscheider zur Abscheidung von Flüssigkeiten aus einem Gasstrom mit mindestens zwei parallel zueinander angeordneten Abscheiderlamellen und mindestens einem quer zur Längsrichtung der Abscheiderlamellen angeordneten, die Abscheiderlamellen beabstandet zueinander haltenden Abstandshalter, wobei an mindestens einem der quer zur Längsrichtung und quer zur Höhe der Abscheiderlamellen verlaufenden Randbereiche des mindestens einen Abstandshalters eine Schiene angeordnet ist, der mindestens eine Abstandshalter mindestens eine erste Verriegelungseinrichtung aufweist, die Schiene mindestens eine zweite Verriegelungseinrichtung aufweist und die mindestens eine erste Verriegelungseinrichtung und die mindestens eine zweite Verriegelungseinrichtung formschlüssig ineinandergreifen und die Abscheiderlamellen mit dem mindestens einen Abstandshalter und der Schiene verriegeln.

Derartige Tropfenabscheider werden eingesetzt, um in einem Gasstrom befindliche Flüssigkeitströpfchen abzuscheiden. Solche Flüssigkeitströpfchen können durch Kondensationsvorgänge, beispielsweise nach Kühlung durch gezielte Flüssigkeitseinsprühung, durch Absorptions- und Waschprozesse, durch Mitriss aus einem Gas-Flüssigkeits-Gemisch, etc. entstehen. Zur Abscheidung dieser meist sehr kleinen Flüssigkeitströpfchen sind Tropfenabscheider nötig, die damit chemische, besonders auch petrochemische Prozesse durch Entfernung störender Flüssigkeitsanteile optimieren, Kondensatverunreinigungen vermeiden, wertvolle Flüssigkeitsanteile rückgewinnen, für die Einhaltung von Emissionswerten sorgen und Korrosions- und Erosionsprozesse verhindern.

Tropfenabscheider nutzen die höhere Trägheit von Flüssigkeitstropfen gegenüber der geringeren Trägheit des sie mitführenden Gases. Hierzu wird das feuchte Gas durch Einbauten, die Abscheiderlamellen, geführt, in denen die Strömungsrichtung des Gases mehrfach umgelenkt wird. Die Flüssigkeitstropfen können diesen Richtungsänderungen nicht folgen, prallen deshalb auf die Einbauten und setzen sich dort ab. Bei zunehmender Ablagerung der Flüssigkeitstropfen fließen diese nach unten.

Tropfenabscheider werden üblicherweise im Bereich des Apparateausgangs, also beispielsweise am Kolonnenkopf oder aber in Verbindung mit einem Sammelboden zwischen zwei Füllkörperstufen eingesetzt. Dadurch wird der Flüssigkeitsaustrag aus der Kolonne bzw. der Flüssigkeitsmitriss (Entrainment) von einer Stufe in die nächste minimiert.

Bei einem erfindungsgemäßen Tropfenabscheider erfolgt die Umlenkung der Strömungsrichtung des Gases durch Abscheiderlamellen, die einen (mehrfach) gekrümmten Querschnitt aufweisen. Dabei sind mindestens zwei Abscheiderlamellen parallel nebeneinander angeordnet. Die Abscheiderlamellen sind mit Abstandshaltern verbunden, wobei die Abstandshalter die Abscheiderlamellen parallel und in einem Abstand zueinander halten.

Ein derartiger Tropfenabscheider ist beispielsweise in der WO2018/149433 A1 gezeigt. Dort wird beschrieben, dass die Abscheiderlamellen mit als Abstandshaltern ausgebildeten Endwänden verschweißt sind. Die dadurch ausgebildeten Abscheiderlagen sind über Steckverbindungen mit einer Tragkonstruktion verbunden.

Nachteilig an derartigen Konstruktionen ist, dass die Schweißverbindungen relativ aufwändig in der Herstellung sind, Nachbearbeitung, wie z.B. Beizen mit den damit verbundenen Nachteilen, erfordern und sehr korrosionsanfällig ist.

Ferner ist aus der DE 20 2011 106925 U1 ein weiterer Tropfenabscheider bekannt. Der Tropfenabscheider umfasst ein oder mehrere Tropfenabscheiderpakete mit mindestens zwei parallel zueinander angeordneten länglichen Lamellentropfenabscheiderprofilen. An mindestens einem Ende der Lamellentropfenabscheiderprofile sind Halteleisten zwischen benachbarten Lamellentropfenabscheiderprofilen angeordnet. Eine der Seitenflächen der Halteleisten ist mit vorstehenden Rastzapfen versehen, die jeweils andere Seitenfläche der Halteleisten weist Rastvertiefungen auf. Die Lamellentropfenabscheiderprofile weisen an ihren Enden Löcher auf, durch die die Rastzapfen der Halteleisten hindurchgeführt werden können. Bei dem Zusammenbau eines Tropfenabscheiderpakets werden die Rastzapfen der Halteleisten durch die Löcher in den Enden der Lamellentropfenabscheiderprofile hindurchgeführt, in die Rastvertiefungen der nächsten Halteleisten eingesteckt und dort verrastet. Um nebeneinanderliegende Tropfenabscheiderpakete miteinander zu verbinden, können rohrförmige, geschlitzte Klemmelemente vorgesehen sein, die in Quernuten am oberen und unteren Endbereich der Halteleisten eingreifen und die gegenüber angeordneten Halteleisten von zwei Tropfenabscheiderpaketen miteinander verklemmen.

Aufgabe der vorliegenden Erfindung ist es, einen Tropfenabscheider bereitzustellen, der einfach herstellbar ist, eine sichere Verbindung zwischen den Abscheiderlamellen und den Abstandshaltern ermöglicht und korrosionsbeständig ist.

Hierzu ist erfindungsgemäß vorgesehen, dass die mindestens eine erste Verriegelungseinrichtung des mindestens einen Abstandshalters als vorspringendes Element in Form eines Streifens ausgebildet ist, die mindestens eine zweite Verriegelungseinrichtung der Schiene als Ausnehmung in Form einer Öffnung in der Schiene ausgebildet ist, durch die der Streifen durchgeführt ist und der aus der Öffnung der Schiene hinausragende Teil des Streifens des mindestens einen Abstandshalters umgebogen ist.

Die Verbindung zwischen den Abscheiderlamellen, den Abstandshaltern und der Schiene erfolgt also rein formschlüssig. Dadurch werden Schweißverbindungen in dem Tropfenabscheider überflüssig. Durch die Verriegelungseinrichtungen wird dennoch eine sichere und stabile Verbindung der Abstandshalter mit den Abscheiderlamellen realisiert. Das vorspringende Element, also die erste Verriegelungseinrichtung, ist einstückig mit dem Abstandshalter ausgebildet. Die zweite Verriegelungseinrichtung wird durch die Öffnung in der Schiene ausgebildet und ist somit einstückig mit der Schiene ausgebildet. Das vorspringende Element, also der Streifen, greift in die Ausnehmung ein, wodurch die formschlüssige Verbindung zwischen der Schiene und dem mindestens einen Abstandshalter und damit auch den Abscheiderlamellen ausgebildet ist. Dadurch, dass der aus der Öffnung der Schiene hinausragende Teil des Streifens des mindestens einen Abstandshalters umgebogen ist, kann eine sichere und stabile formschlüssige Verriegelung zwischen dem mindestens einen Abstandshalter und der Schiene erreicht werden. Der Streifen liegt also an einer Außenseite der Schiene an, so dass ein Herausrutschen des Streifens aus der Schiene verhindert wird und eine sichere Befestigung erzielt ist.

Eine stabile Verbindung der Abscheiderlamellen mit den Abstandshaltern und der Schiene wird erzielt, wenn die Schiene einen u-förmigen Querschnitt aufweist und den Randbereich des mindestens einen Abstandshalters auf beiden Seiten umgibt.

Die Stabilität des Tropfenabscheiders kann weiter erhöht werden, wenn an beiden quer zur Längsrichtung und quer zur Höhe der Abscheiderlamellen verlaufenden Randbereiche des mindestens einen Abstandshalter seine Schiene angeordnet ist.

In noch einer weiteren Variante kann vorgesehen sein, dass der mindestens eine Abstandshalter plattenförmig ausgebildet ist und das vorspringende Element in der Ebene des mindestens einen Abstandshalters liegt. Der Abstandshalter kann dann einfach aus Blech ausgestanzt werden. Dabei entspricht die Form der Seiten des mindestens einen Abstandhalters, mit denen der Abstandshalter an den Abscheiderlamellen anliegt, der Querschnittsform der Abscheiderlamellen und ist daher ebenfalls mehrfach gekrümmt.

Die Stabilität des gesamten Tropfenabscheiders kann dadurch weiter erhöht werden, dass mindestens eine der Abscheiderlamellen mit einer Aussparung versehen ist, in die die mindestens eine Schiene eingreift. Dadurch wird eine zusätzliche Steckverbindung zwischen der Schiene bzw. den Schienen und den Abscheiderlamellen geschaffen, durch die eine mögliche Axialbewegung der Abscheiderlamellen verhindert wird.

In noch einer weiteren Ausführungsform kann der Tropfenabscheider eine Mehrzahl von parallel zueinander angeordneten Abscheiderlamellen umfassen, wobei nebeneinanderliegende Abscheiderlamellen durch Abstandshalter beanstandet zueinander gehalten sind, die Abstandshalter quer zur Längsrichtung der Abscheiderlamellen nebeneinanderliegen und an beiden quer zur Längsrichtung und quer zur Höhe der Abscheiderlamellen verlaufenden Randbereichen der nebeneinanderliegenden Abstandshalter je eine gemeinsame Schiene angeordnet ist, wobei jeder der Abstandshalter an seinem oberen und an seinem unteren Randbereich einen vorstehenden Streifen aufweist und die vorstehenden Streifen in entsprechende Öffnungen in der jeweiligen Schiene eingreifen. Dadurch, dass die Abstandshalter nebeneinanderliegen, bilden sie eine Abstandshalterplatte aus, durch die die nebeneinanderliegenden Abscheiderlamellen beabstandet zueinander befestigt und gehalten werden, so dass ein Abscheiderlamellenpaket entsteht, das einfach eingebaut werden kann.

Vorzugsweise kann ferner vorgesehen sein, dass an jeder Abscheiderlamelle mehrere Abstandshalter in Längsrichtung der Abscheiderlamellen beanstandet zueinander angeordnet sind, wobei die Abstandshalter nebeneinanderliegende Abscheiderlamellen, die an derselben Position in Längsrichtung der Abscheiderlamellen liegen, am beiden quer zur Längsrichtung und quer zur Höhe der Abscheiderlamellen verlaufenden Randbereichen mit je einer gemeinsamen Schiene verriegelt sind. Entlang der Längsrichtung der Abscheiderlamellen sind diese also an mehreren Punkten mittels der Abstandshalter aneinander befestigt. Der Abstand der Abstandshalterplatten zueinander in Längsrichtung der Abscheiderlamellen beträgt dabei etwa 200 - 500mm. Die dadurch ausgebildeten Abscheiderlamellenpakete sind sehr stabil und können einfach gehandhabt, transportiert und eingebaut werden.

In noch einer weiteren Variante kann vorgesehen sein, dass die Streifen der Abstandshalter eine unterschiedliche Länge aufweisen. Vorzugsweise weisen bei nebeneinander angeordneten Abstandshaltern zumindest ein paar der Abstandshalter Streifen mit einer größeren Länge auf. Dadurch kann beispielweise auf unterschiedliche Einbausituationen des Tropfenabscheiders eingegangen werden. So können z.B. an den Stellen, an denen der fertige Tropfenabscheider auf einer Tragkonstruktion aufliegt, kürzere Streifen vorgesehen werden.

Um die Herstellung und Montage des Tropfenabscheiders zu vereinfachen, kann vorgesehen werden, dass nur ein Teil der vorstehenden Streifen der Abstandshalter umgebogen sind. So ist es ausreichend, dass in einer Reihe nebeneinander angeordneter Abstandshalter, die an mindestens einem ihrer Randbereiche von derselben Schiene umschlossen sind, der/die Streifen von jedem dritten, bevorzugt jedem fünften Abstandshalter umgebogen sind.

Um eine einfache Herstellung, hohe Stabilität und gute Beständigkeit des Tropfenabscheiders zu erhalten, kann vorgesehen sein, dass der Tropfenabscheider aus metallischen Werkstoffen besteht.

Im Folgenden wird die Erfindung anhand von Figuren genauer beschrieben. Es zeigen:
Fig. 1: perspektivische Darstellung eines erfindungsgemäßen Tropfenabscheiders von oben,
Fig. 2: vergrößerte Darstellung eines Endbereichs des Tropfenabscheiders aus Fig. 1,
Fig. 3: Seitenansicht einer Verbindungsstelle zwischen Abscheiderlamellen und einem Abstandshalter des Tropfenabscheiders aus Fig. 1,
Fig. 4: erste Ausführungsform eines Abstandshalters des Tropfenabscheiders aus Fig. 1,
Fig. 5: zweite Ausführungsform eines Abstandshalters des Tropfenabscheiders aus Fig. 1 und
Fig. 6: Seitenansicht einer Schiene des Tropfenabscheiders das aus Fig. 1

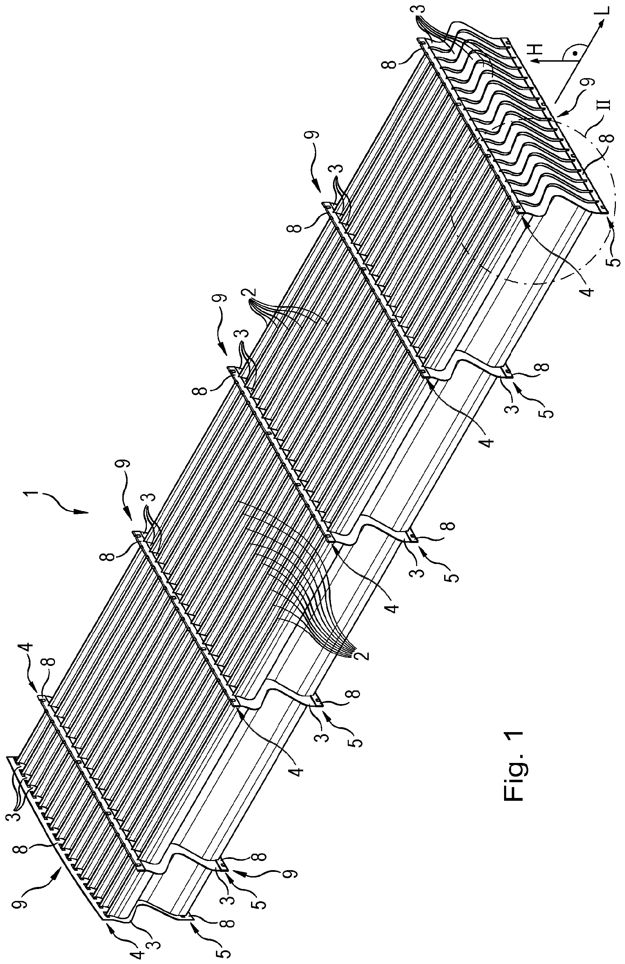

In Fig. 1 ist eine perspektivische Darstellung eines Tropfenabscheiders 1 von oben gezeigt. Der Tropfenabscheider 1 umfasst eine Mehrzahl von langgestreckten, parallel nebeneinander angeordneten Abscheiderlamellen 2. Im gezeigten Ausführungsbeispiel sind sechzehn Abscheiderlamellen 2 nebeneinander angeordnet. Wie an der Stirnseite des Tropfenabscheiders 1 deutlich zu erkennen, haben die Abscheiderlamellen 2 einen mehrfach gekrümmten Querschnitt. Im dargestellten Ausführungsbeispiel ist der Querschnitt der Abscheiderlamellen 2 in etwa S-förmig.

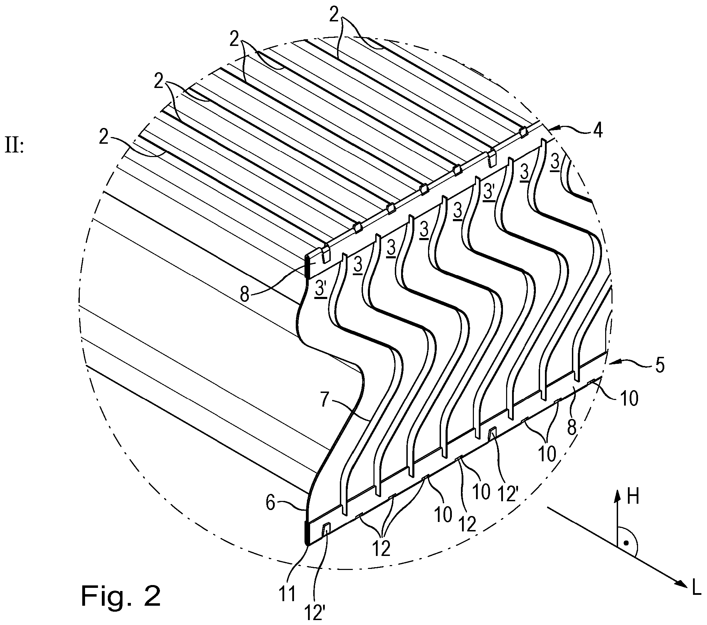

Senkrecht zur Längsrichtung L der Abscheiderlamellen 2 sind zwischen den Abscheiderlamellen 2 Abstandshalter 3 angeordnet. In Fig. 1 sind jeweils an einem vorderen und an einem hinteren Ende der Abscheiderlamellen 2 sowie an vier zwischen dem vorderen und dem hinteren Ende der Abscheiderlamellen 2 in Längsrichtung L der Abscheiderlamellen 2 beanstandet zueinander angeordneten Positionen Abstandshalter 3 angebracht. Die an der gleichen Position in Längsrichtung L der Abscheiderlamellen 2 nebeneinander angeordneten Abstandshalter 3 sind entlang ihrer oberen und unteren Randbereiche 4, 5 durch eine Schiene 8 miteinander verbunden. Die nebeneinander angeordneten Abstandshalter 3 und die Schienen 8 bilden somit Abstandshalterplatten 9 aus. Dabei ist auf jeder Seite jeder Abscheiderlamellen 2 ein Abstandshalter 3 angeordnet. Dies wird in Folgenden unter Bezug auf Fig. 2 noch genauer beschrieben. In Fig. 1 sind die parallel und beabstandet zueinander angeordneten Abscheiderlamellen 2 durch sechs Abstandshalterplatten 9 gehalten.

In Fig. 2 ist ein in Fig. 1 mit II bezeichneter Ausschnitt des Endbereichs des Tropfenabscheiders 1 in Vergrößerung gezeigt. Es ist deutlich zu erkennen, dass jeder Abstandshalter 3 in etwa plattenförmig ist und einen oberen Randbereich 4 und einen unteren Randbereich 5 aufweist. Sowohl der obere Randbereich 4 als auch der untere Randbereich 5 der Abstandshalter 3 erstreckt sich im Wesentlichen senkrecht zur Längserstreckung L und zur Höhe H der Abscheiderlamellen 3. Die beiden Seitenränder 6, 7 der Abstandshalter 3 weisen eine mehrfach gekrümmte Form auf, die dem Querschnitt der Abscheiderlamellen 2 entspricht. Die Abstandshalter 3 sind zwischen den Abscheiderlamellen 2 angeordnet, schmiegen sich mit ihren Seitenränder 6, 7 an die Abscheiderlamellen 2 und halten die Abscheiderlamellen 2 so beabstandet zueinander.

Die Abstandhalter 3 zwischen den einzelnen Abscheiderlamellen 2 liegen an der gleichen Position in Längsrichtung L der Abscheiderlamellen 2 und sind jeweils an ihrem oberen Randbereich 4 und ihrem unteren Randbereich 5 von einer Schiene 8 umgeben. Jede Schiene 8 hat einen u-förmigen Querschnitt und umgibt den jeweiligen Randbereich 4, 5 der Abstandshalter 3 auf beiden Seiten. Zudem weist jede Schiene 8 eine Mehrzahl von zweiten Verriegelungseinrichtungen in Form von Öffnungen 10 auf. Die Anzahl der Öffnungen 10 in jeder Schiene 8 entspricht der Anzahl der von der jeweiligen Schiene 8 umschlossenen Abstandhalter 3. Die Öffnungen 10 sind im Quersteg 11 der u-förmigen Schiene 8 angeordnet. Die Position der Öffnungen 10 entspricht in etwa der Mitte des jeweils darunter angeordneten Abstandhalters 3.

Jeder Abstandshalter 3, 3' weist an seinem oberen Randbereich 4 und an seinem unteren Randbereich 5 eine erste Verriegelungseinrichtung in Form eines einen überstehenden Streifen 12, 12' auf. Die Streifen 12, 12' liegen in einer Ebene mit dem restlichen Bereich des Abstandshalters 3. Die Streifen 12, 12' sind mittig an dem jeweiligen Randbereich 4, 5 angeordnet. Jeder Streifen 12, 12' erstreckt sich durch eine der Öffnungen 10 in den Schienen 8. Im dargestellten Ausführungsbeispiel sind die Streifen 12' jedes fünften Abstandshalters 3' etwas länger als die Streifen 12 der übrigen Abstandshalter 3. Die längeren Streifen 12' sind umgebördelt, also umgebogen, und liegen an einer Seite der jeweiligen Schiene 8 an. Dadurch bilden die umgebördelten Streifen 12' der Abstandshalter 3' und die zugehörigen Öffnungen 10 der Schienen 8 einen formschlüssigen Verriegelungsmechanismus aus, der die Schienen 8, die Abstandshalter 3, 3' und die Abscheiderlamellen 2 aneinander hält. Es kann auch vorgesehen werden, dass mehr oder weniger Abstandshalter einen Streifen mit einer größeren Länge aufweisen, der durch die entsprechende Öffnung in der jeweiligen Schiene geführt und umgebördelt ist. So können beispielsweise die Streifen aller Abstandshalter umgebördelt sein oder auch nur die Streifen jedes siebten Abstandshalters.

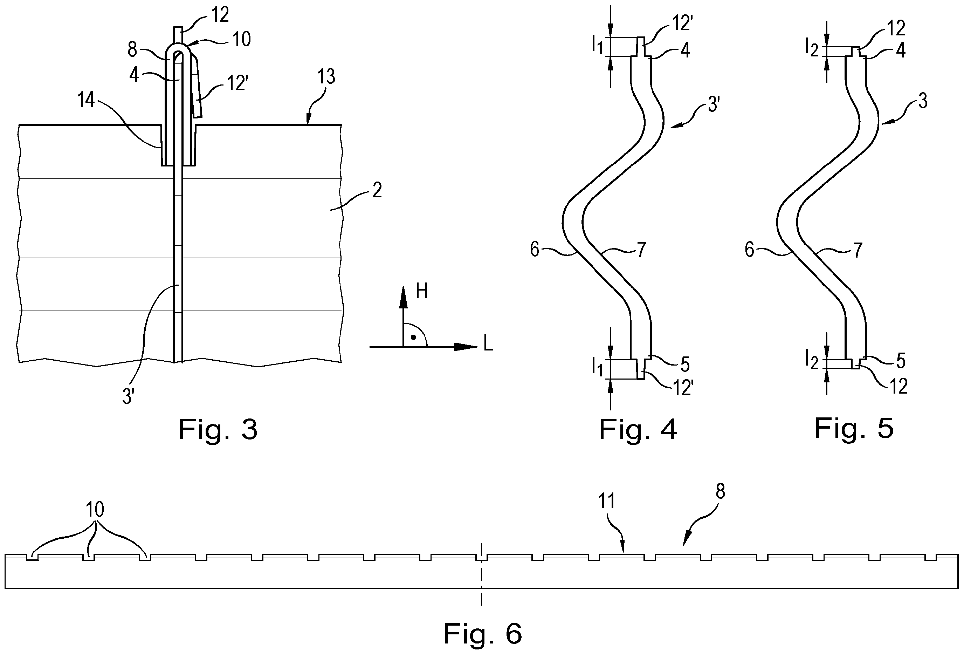

Fig. 3 zeigt eine Seitenansicht eines Bereichs des Tropfenabscheiders 1 aus Fig. 1. Dies ist die Seitenansicht eines der Bereiche der Abscheiderlamellen 2 an denen Abstandshalter 3 angeordnet sind. Es sind der obere Bereich der äußersten Abscheiderlamelle 2 und eines der äußersten Abstandshalter 3' zu sehen. In Fig. 3 sind die Abstandshalter 3, 3' hintereinander in der Bildebene angeordnet. Auf den oberen Randbereich 4 der Abstandshalter 3, 3' ist die u-förmige Schiene 8 aufgesteckt. Der obere Streifen 12' des äußersten Abstandshalters 3' ist durch die Öffnung 10 der Schiene 8 geführt und umgebördelt, so dass er auf der Außenseite der Schiene 8 anliegt. Die parallel und beabstandet zueinander angeordneten Abscheiderlamellen 2 weisen an ihrem oberen Rand 13 und an ihrem unteren Rand (nicht dargestellt), an der Position, an der die Abstandshalter 3 angeordnet sind, eine Aussparung 14 auf, in die die u-förmigen Schienen 8 eingreifen. Dadurch wird die Position der Abscheiderlamellen 2 entlang ihrer Längsrichtung L fixiert, so dass die Abscheiderlamellen 2 nicht in Längsrichtung L durch die Abstandshalter 3, 3' rutschen können. Der Tropfenabscheider 1 ist somit sehr stabil, kann gut gehandhabt, transportiert und montiert werden.

Fig. 4 zeigt den äußersten Abstandshalter 3' des Tropfenabscheiders aus Fig. 1. Wie bereits beschrieben ist der Tropfenabscheider 3' im wesentlichen plattenförmig. Am oberen Randbereich 4 und am unteren Randbereich 5 des Abstandshalter 3' sind in etwa mittig die vorstehenden Streifen 12' ausgebildet. Die vorstehenden Streifen 12' liegen in der gleichen Ebene wie der restliche Abstandshalter 3'. Die Form der Seitenränder 6, 7 des Abstandshalters 3' entspricht der Querschnittsform der Abscheiderlamellen 2. Die Seitenränder 6, 7 des Abstandshalters 3' sind daher ebenfalls mehrfach gekrümmt. Die Streifen 12' weisen eine erste Länge l1 auf, die ausreichend ist, um die Streifen 12' durch die entsprechende Öffnung 10 in der Schiene 8 zu führen und umzubördeln, also umzubiegen.

Fig. 5 zeigt eine einen weiteren Abstandshalter 3, der in den Figuren 1 und 2 zwischen zwei Abstandshalter 3' mit längerem Streifen 12' angeordnet ist. Der Abstandshalter 3 ist im Wesentlichen baugleich zu dem Abstandshalter 3' aus Fig. 4 mit dem Unterschied, dass der vorstehende Streifen 12 eine zweite Länge l2 aufweist. Die zweite Länge 2 ist kleiner als die erste Länge l1. Vorzugsweise werden die Abstandshalter 3, 3' aus Blech ausgestanzt.

Es können auch noch weitere Abstandshalter vorgesehen sein, deren vorstehende Elemente, also die Streifen, eine Länge aufweisen, die sich von der Länge l1, l2 der Streifen 12, 12' unterscheidet. Bevorzugt ist diese Länge kürzer.

Fig. 6 zeigt eine Seitenansicht einer Schiene 8. Wie bereits beschrieben, ist die Schiene 8 als Profil mit einem U-förmigen Querschnitt ausgebildet. Im oberen Bereich der Schiene 8, also im Quersteg 11 des U-förmigen Profils, sind die Öffnungen 10 ausgebildet, durch die sich die Streifen 12, 12' der Abstandshalter hindurch erstrecken.

Vorzugsweise sind alle Bestandteile des Tropfenabscheiders, insbesondere aber die Abstandshalter mit den einstückig damit ausgebildeten Streifen, aus einem metallischen Werkstoff.

### Bezugszeichenliste

- 1: Tropfenabscheider
- 2: Abscheiderlamelle
- 3, 3': Abstandshalter
- 4: oberer Randbereich Abstandshalter
- 5: unterer Randbereich Abstandshalter
- 6: Seitenrand Abstandshalter
- 7: Seitenrand Abstandshalter
- 8: Schiene
- 9: Abstandshalterplatte
- 10: Öffnung Schiene
- 11: Quersteg Schiene
- 12, 12': Streifen Abstandshalter
- 13: oberer Rand Abscheiderlamelle
- 14: Aussparung

- L: Längserstreckung Abscheiderlamelle
- H: Höhe Abscheiderlamelle
- l1: Länge Streifen 12'
- l2: Länge Streifen 12

## Patentansprüche

1. Tropfenabscheider (1) zur Abscheidung von Flüssigkeiten aus einem Gasstrom mit mindestens zwei parallel zueinander angeordneten Abscheiderlamellen (2) und mindestens einem quer zur Längsrichtung (L) der Abscheiderlamellen (2) angeordneten, die Abscheiderlamellen (2) beabstandet zueinander haltenden Abstandshalter (3), wobei an mindestens einem der quer zur Längsrichtung (L) und quer zu Höhe (H) der Abscheiderlamellen (2) verlaufenden Randbereiche (4, 5) des mindestens einen Abstandshalters (3) eine Schiene (8) angeordnet ist, der mindestens eine Abstandshalter (3) mindestens eine erste Verriegelungseinrichtung aufweist, die Schiene (8) mindestens eine zweite Verriegelungseinrichtung aufweist und die mindestens eine erste Verriegelungseinrichtung und die mindestens eine zweite Verriegelungseinrichtung formschlüssig ineinandergreifen und die Abscheiderlamellen (2) mit dem mindestens einen Abstandshalter (3) und der Schiene (8) verriegeln, **dadurch gekennzeichnet, dass** die mindestens eine erste Verriegelungseinrichtung des mindestens einen Abstandshalters (3) als vorspringendes Element in Form eines Streifens (12, 12') ausgebildet ist und die mindestens eine zweite Verriegelungseinrichtung der Schiene (8) als Ausnehmung in Form einer Öffnung (10) in der Schiene (8) ausgebildet ist, durch die der Streifen (12, 12') durchgeführt ist und der aus der Öffnung (10) der Schiene (8) hinausragende Teil des Streifens (12, 12') des mindestens einen Abstandshalters (3) umgebogen ist.

2. Tropfenabscheider (1) nach Anspruch 1, **dadurch gekennzeichnet, dass** die Schiene (8) einen u-förmigen Querschnitt aufweist und den Randbereich (4, 5) des mindestens einen Abstandshalters (3) umgibt.

3. Tropfenabscheider (1) nach Anspruch 1 oder 2, **dadurch gekennzeichnet, dass** an beiden quer zur Längsrichtung (L) und quer zu Höhe (H) der Abscheiderlamellen (2) verlaufenden Randbereichen (4, 5) des mindestens einen Abstandshalters (3) eine Schiene (8) angeordnet ist.

4. Tropfenabscheider (1) nach einem der Ansprüche 1 bis 3, **dadurch gekennzeichnet, dass** der mindestens eine Abstandshalter (3) plattenförmig ausgebildet ist und das vorspringende Element in der Ebene des mindestens einen Abstandshalters (3) liegt.

5. Tropfenabscheider (1) nach einem der vorherigen Ansprüche, **dadurch gekennzeichnet, dass** mindestens eine der Abscheiderlamellen (2) mit einer Aussparung (14) versehen ist, in die die mindestens eine Schiene (8) eingreift.

6. Tropfenabscheider (1) nach einem der vorherigen Ansprüche, umfassend eine Mehrzahl von parallel zueinander angeordneten Abscheiderlamellen (2), wobei nebeneinanderliegende Abscheiderlamellen (2) durch Abstandshalter (3) beabstandet zueinander gehalten sind und die Abstandshalter (3) quer zur Längsrichtung (L) der Abscheiderlamellen (2) nebeneinanderliegen und an beiden quer zur Längsrichtung (L) und quer zu Höhe (H) der Abscheiderlamellen (2) verlaufenden Randbereichen (4, 5) der nebeneinanderliegenden Abstandshalter (3) je eine gemeinsame Schiene (8) angeordnet ist, wobei jeder der Abstandshalter (3) an seinem oberen (4) und an seinem unteren Randbereich (5) einen vorstehenden Streifen (12, 12') aufweist und die vorstehenden Streifen (12, 12') in entsprechende Öffnungen (10) in der jeweiligen Schiene (8) eingreifen.

7. Tropfenabscheider (1) nach Anspruch 6, **dadurch gekennzeichnet, dass** an jeder Abscheiderlamelle (2) mehrere Abstandshalter (3) in Längsrichtung (L) der Abscheiderlamellen (2) beabstandet zueinander angeordnet sind, wobei die Abstandshalter (3) nebeneinanderliegen liegender Abscheiderlamellen (2), die an derselben Position in Längsrichtung (L) der Abscheiderlamellen (2) liegen, an beiden quer zur Längsrichtung (L) und quer zu Höhe (H) der Abscheiderlamellen (2) verlaufenden Randbereichen (4, 5) mit je einer gemeinsamen Schiene (8) verriegelt sind.

8. Tropfenabscheider (1) nach einem der Ansprüche 6 oder 7, **dadurch gekennzeichnet, dass** die Streifen (12, 12') der Abstandshalter (3) eine unterschiedliche Länge aufweisen.

9. Tropfenabscheider (1) nach einem der Ansprüche 6 bis 8, **dadurch gekennzeichnet, dass** nur ein Teil der vorstehenden Streifen (12, 12') der Abstandshalter (3) umgebogen sind.

10. Tropfenabscheider (1) nach einem der vorherigen Ansprüche, **dadurch gekennzeichnet, dass** der Tropfenabscheider (1) aus metallischen Werkstoffen besteht.

## Claims

1. Mist eliminator (1) for separating liquids from a gas flow, having at least two separator blades (2) arranged parallel to one another and at least one spacer (3) arranged transversely to the longitudinal direction (L) of the separator blades (2) and holding the separator blades (2) at a distance from one another, wherein a rail (8) is arranged on at least one of the edge areas (4, 5) of the at least on spacer (3) extending transversely to the longitudinal direction (L) and transversely to the height (H) of the separator blades (2), the at least one spacer (3) has at least one first locking device, the rail (8) has at least one second locking device and the at least one first locking device and the at least one second locking device engage in one another in a positive-locking manner and lock the separator blades (2) with the at least one spacer (3) and the rail (8) **characterized in that** the at least one first locking device of the at least one spacer (3) is designed as a protruding element in the form of a strip (12, 12'), and the at least one second locking device of the rail (8) is designed as a recess in form of an opening (10) in the rail (8) through which the strip (12, 12') is passed and the part of the strip (12, 12') of the at least one spacer (3) protruding out of the opening (10) of the rail (8) is bent over.

2. Mist eliminator (1) according to claim 1, **characterized in that** the rail (8) has a U-shaped cross-section and surrounds the edge area (4, 5) of the at least one spacer (3).

3. Mist eliminator (1) according to claim 1 or 2, **characterized in that** a rail (8) is arranged on both edge areas (4, 5) of the at least one spacer (3) running transversely to the longitudinal direction (L) and transversely to the height (H) of the separator blades (2).

4. Mist eliminator (1) according to one of claims 1 to 3, **characterized in that** the at least one spacer (3) is plate-shaped and the protruding element lies in the plane of the at least one spacer (3).

5. Mist eliminator (1) according to one of the preceding claims, **characterized in that** at least one of the separator blades (2) is provided with a recess (14) in which the at least one rail (8) engages.

6. Mist eliminator (1) according to one of the preceding claims, comprising a plurality of separator blades (2) arranged parallel to one another, wherein adjacent separator blades (2) are held spaced apart from one another by spacers (3) and the spacers (3) lie adjacent to one another transversely to the longitudinal direction (L) of the separator blades (2) and at both edge areas (4, 5) extending transversely to the longitudinal direction (L) and transversely to the height (H) of the separator blades (2) of the adjacent spacers (3) a common rail (8) is arranged, wherein each of the spacers (3) has a protruding strip (12, 12') at its upper (4) and at its lower edge area (5) and the protruding strips (12, 12') engage in corresponding openings (10) in the respective rail (8).

7. Mist eliminator (1) according to claim 6, **characterized in that** at each separator blade (2) a plurality of spacers (3) are arranged in the longitudinal direction (L) of the separator blades (2) spaced apart from one another, the spacers (3) of adjacent separator blades (2), which lie at the same position in the longitudinal direction (L) of the separator blades (2), are each locked to a common rail (8) at both edge areas (4, 5) running transversely to the longitudinal direction (L) and transversely to the height (H) of the separator blades (2).

8. Mist eliminator (1) according to one of claims 6 or 7, **characterized in that** the strips (12, 12') of the spacers (3) have a different length.

9. Mist eliminator (1) according to one of claims 6 to 8, **characterized in that** only a part of the protruding strips (12, 12') of the spacers (3) are bent over.

10. Mist eliminator (1) according to one of the preceding claims, **characterized in that** the mist eliminator (1) consists of metallic materials.

## Revendications

1. Séparateur de gouttes (1) pour séparer des liquides d'un flux de gaz, comprenant au moins deux lamelles de séparation (2) agencées parallèlement l'une à l'autre et au moins un élément d'espacement (3) agencé transversalement à la direction longitudinale (L) des lamelles de séparation (2) et maintenant les lamelles de séparation (2) à une certaine distance l'une de l'autre, un rail (8) étant agencé sur au moins une des zones de bord (4, 5) du au moins un élément d'espacement (3) qui s'étendent transversalement à la direction longitudinale (L) et transversalement à la hauteur (H) des lamelles de séparation (2), le au moins un élément d'espacement (3) présentant au moins un premier dispositif de verrouillage, le rail (8) présentant au moins un second dispositif de verrouillage, et le au moins un premier dispositif de verrouillage et le au moins un second dispositif de verrouillage venant en prise l'un avec l'autre par complémentarité de forme et verrouillant les lamelles de séparation (2) sur le au moins un élément d'espacement (3) et le rail (8), **caractérisé en ce que** le au moins un premiers dispositif de verrouillage du au moins un élément d'espacement (3) est réalisé en tant qu'élément en saillie ayant la forme d'une bande (12), et le au moins un second dispositif de verrouillage du rail (8) est réalisé en tant que cavité sous la forme d'une ouverture dans le rail (8), à travers laquelle la bande (12, 12') est amenée à passer, et la partie de la bande (12, 12') du au moins un élément d'espacement (3) faisant saillie en dehors de l'ouverture (10) du rail (8) est repliée.

2. Séparateur de gouttes (1) selon la revendication 1, **caractérisé en ce que** le rail (8) présente une section transversale en forme de U et entoure la zone de bord (4, 5) du au moins un élément d'espacement (3).

3. Séparateur de gouttes (1) selon la revendication 1 ou 2, **caractérisé en ce qu'un** rail (8) est agencé sur les deux zones de bord (4, 5) du au moins un élément d'espacement (3) s'étendant transversalement à la direction longitudinale (L) et transversalement à la hauteur (H) des lamelles de séparation (2).

4. Séparateur de gouttes (1) selon l'une quelconque des revendications 1 à 3, **caractérisé en ce que** le au moins un élément d'espacement (3) est réalisé en forme de plaque et l'élément en saillie se trouve dans le plan du au moins un élément d'espacement (3).

5. Séparateur de gouttes (1) selon l'une quelconque des revendications précédentes, **caractérisé en ce qu'**au moins l'une des lamelles de séparation (2) est munie d'un évidement (14) dans lequel le au moins un rail (8) vient en prise.

6. Séparateur de gouttes (1) selon l'une quelconque des revendications précédentes, comprenant une pluralité de lamelles de séparation (2) agencée parallèlement les unes aux autres, dans lequel des lamelles de séparation (2) agencées les unes à côté des autres sont maintenues à une certaine distance les unes des autres par des éléments d'espacement (3), et les éléments d'espacement (3) sont agencés les uns à côté des autres transversalement à la direction longitudinale (L) des lamelles de séparation (2), et un rail commun (8) est agencé respectivement sur les deux zones de bord (4, 5) des éléments d'espacement (3) agencés les uns à côté des autres, s'étendent transversalement à la direction longitudinale (L) et transversalement à la hauteur (H) des lamelles de séparation (2), dans lequel chacune des éléments d'espacement (3) présente une bande en saillie (12, 12') sur sa zone de bord supérieure (4) et sur sa zone de bord inférieure (5), et les bandes en saillie (12, 12') viennent en prise dans des ouvertures correspondantes (10) dans le rail respectif (8).

7. Séparateur de gouttes (1) selon la revendication 6, **caractérisé en ce que** plusieurs éléments d'espacement (3) sont agencés sur chaque lamelle de séparation (2) à une certaine distance les unes des autres dans la direction longitudinale (L) des lamelles de séparation (2), les éléments d'espacement (3) de lamelles de séparation (2) les unes à côté des autres, qui se trouvent dans la même position dans la direction longitudinale (L) des lamelles de séparation (2), étant respectivement verrouillés par un rail commun (8) sur les deux zones de bord (4, 5) s'étendant transversalement à la direction longitudinale (L) et transversalement à la hauteur (H) des lamelles de séparation (2).

8. Séparateur de gouttes (1) selon l'une quelconque des revendications précédentes, **caractérisé en ce que** les bandes (12, 12') des éléments d'espacement (3) présentent une longueur différente.

9. Séparateur de gouttes (1) selon l'une des revendications 6 à 8, **caractérisé en ce que** seules certaines des bandes en saillie (12, 12') des éléments d'espacement (3) sont repliées.

10. Séparateur de gouttes (1) selon l'une des revendications précédentes, **caractérisé en ce que** le séparateur de gouttes (1) est constitué de matériaux métalliques.
